# EUROPEAN PATENT APPLICATION

(11) **EP 2 083 595 A1**
(43) Date of publication of application: **29.07.2009**
(21) Application number: 08001258.6
(22) Date of filing: 23.01.2008
(51) Int. Cl.: H04W 24/00

(54) **Method, apparatuses and system for network self configuration and optimization at reduced signaling**

(71) Applicant: Nokia Siemens Networks Oy, 02610 Espoo (FI)
(72) Inventor: Breuer, Volker, 16727 Bötzow (DE); Martos-Riano, Demian, 10115 Berlin (DE); Vesely, Alexander, 8330 Feldbach (AT)
(74) Representative: Eisenführ, Speiser & Partner

(57) **Abstract**

The present invention relates to a method and apparatuses for selecting a cell identifier in a cellular network, wherein a predetermined information indicating a search phase for the cell identifier is broadcast from a cell. At least one cell identifier of respective neighbouring cells is determined and reported to the cell in response to a receipt of the predetermined information. The cell identifier is then set for the cell based on the reported at least one cell identifier. Thereby, cell identity setting and neighbour relations establishment can be automated at low signaling load and the need of manual planning can be reduced.

## Description

### FIELD OF THE INVENTION

The present invention relates to a method and an apparatus for selecting and/or setting a cell identifier, which can be used e.g. in the field of self-optimisation and/or self-installation within a cellular network, such as a radio access network of a mobile communication system.

### BACKGROUND OF THE INVENTION

Current macro networks are based on cell planning, i.e. before a new base station or access device (e.g. a NodeB in Universal Mobile Communications system (UMTS) or an enhanced NodeB (eNodeB) in enhanced Long Term Evolution (LTE) systems) is added to the network (a) collision-free scrambling code(s) or physical cell identifier(s) (CID(s)) will be selected for the radio cells it provides. These physical CIDs are used in the physical protocol layer and may be selected by a radio planning tool in order to avoid collision with neighbouring cells, which would lead to interference conditions hindering the identification of any of the colliding cells with identical physical CIDs. Additionally, a cell global identifier (CGI), which is used in the application protocol layer, provides information which clearly identifies a cell worldwide, for instance. The CGI can be made up of several message elements, such as a mobile country code (MCC), mobile network code (MNC), anarea code (e.g. location area code (LAC) or tracking area code (TAC)) and a cell identifier value which is not related to the physical CID.

Such a radio planning process is a time consuming and critical process, as in certain cases even the location where a new node is to be installed is not known in sufficient detail. In addition, modifications in the actual network (mast, antenna, propagation conditions) are cumbersome if not difficult or impossible to follow in the radio planning tool.

For example, while in the UMTS terrestrial radio access network (UTRAN) cells use one out of 512 scrambling codes to distinguish each other, in LTE systems there are 3 x 170 = 510 different scrambling sequence coding possibilities (3 primary synchronization channels (PSCH) and 170 secondary synchronization channels (SSCH) codes) and 504 physical CIDs are to be considered for assignment purposes to the different cells. Scrambling code allocation in UMTS is currently based on explicit network planning, requiring engineering expertise.

Different access devices (e.g. (e)NodeBs) need to have different physical cell IDs assigned in downlink to avoid collisions, as otherwise signals from different cells can not be distinguished by a terminal device (e.g. a user equipment (UE) in a UMTS architecture). In the field of self-optimization, an automated neighbour relation (ANR) information, where a UE is required to decode a neighbour broadcast information to obtain a global cell ID required for setting up network connectivity between (e)NodeBs (e.g. an X2 interface in case of an LTE architecture) is currently discussed, e.g., in temporary documents RAN3-072014 and RAN3-072376.

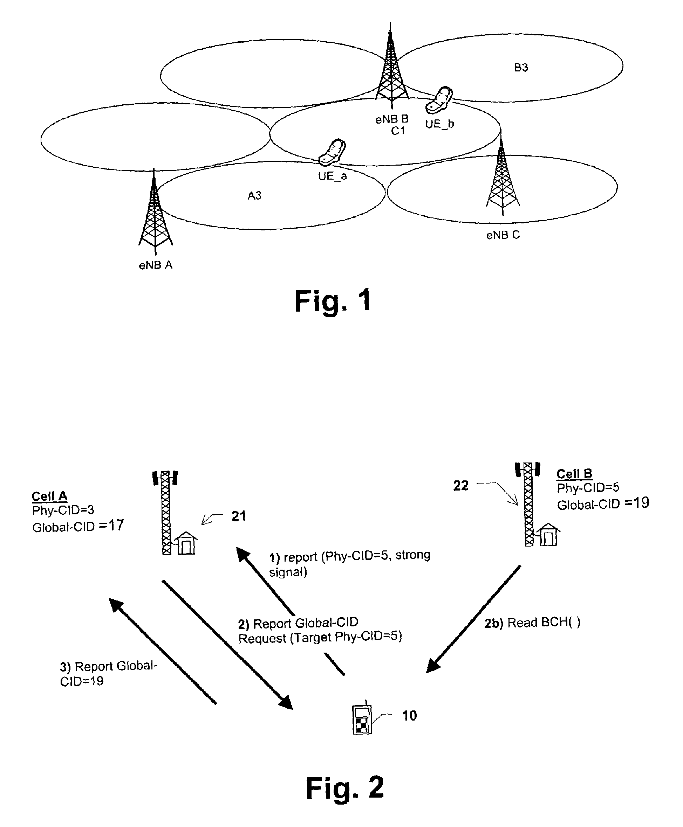

Fig. 2 shows an exemplary signalling diagram of a solution for autonomous global cell-ID retrieval as described in RAN3-72014, Oct. 2007, which indicates an information exchange between a UE 10 and two eNBs 21 and 22 responsible for respectively controlling neighbouring cells A and B. In step 1, the UE 10 reports that a strong signal has been received from a cell with physical CID "5". Then, in step 2, the eNB 21, not knowing a neighbour cell with physical CID "5", requests the UE to obtain the related Global CID. In step 2b, the UE 10 reads a broadcast information received from the eNB 22 to obtain the global CID "19" of the eNB 22. Finally, in step 3, the UE 10 reports the global CID "19" to the requesting eNB 21.

However, the considered solution for global CID retrieval still leaves some open questions. Broadcast channel (BCH) decoding and global CID reporting is only required for cells newly added to the network. How can those cells be identified, so that a UE supporting this functionality will not drain its battery by decoding all cells? The respective support functionality may be mainly supported in a terminal's idle mode only but is not necessarily restricted to it. How can this be achieved without adding unnecessary dedicated (by means of active mode radio resource control (RRC) signaling) signaling or common signaling (to e.g. the broadcast channel?)? Moreover, how can cell planning be aided, without the necessity to plan the allocation of physical CIDs in all details ?

### SUMMARY OF THE INVENTION

The present invention provides for a low-signaling mechanism for search and selection of an appropriate cell identifier.

Embodiments are directed to a method comprising:
- broadcasting from a cell a predetermined information indicating a search phase for a cell identifier;
- determining at least one cell identifier of respective neighbouring cells and reporting said at least one determined cell identifier to said cell in response to a receipt of said predetermined information; and
- setting said cell identifier for said cell based on said reported at least one cell identifier.

Additionally, embodiments are directed to an apparatus comprising:
- a checking controller configured to broadcast to a cellular network a predetermined information indicating a search phase for a cell identifier; and
- a setting controller configured to set said cell identifier for said cell based on at least one cell identifier reported by said cellular network.

Moreover, embodiments are directed to an apparatus comprising a reporting controller configured to determine at least one cell identifier of respective neighbouring cells and to report said at least one determined cell identifier to a cell in response to a receipt of a predetermined information indicating a search phase for a cell identifier of said cell.

Accordingly, information can be retrieved about neighbouring cells, so as to select an appropriate cell identifier to be used by a concerned cell. A physical cell identifier can thus be searched and selected at reduced signalling effort, and the ANR mechanism can be redefined. The proposed coordinated action of selected terminal devices (e.g. UEs) and network access devices (e.g. (e)NodeBs) allows to identify an appropriate physical identifier for a given cell. This solution provides for minimum signalling effort for terminal based automatic neighbour detection.

The proposed solution provides answers in particular on how ANR is else to be supported if not by terminal devices in a connected mode. A terminal device supporting the proposed reporting function does not have to drain its battery by decoding the BCH of all cells it is able to decode. BCH decoding and reporting of global cell identifiers is only required for and within cells newly brought into operation. As the cells brought newly in the field are not yet inter-meshed with their neighbours, i.e., may be unable to support HO, efforts to identify those cells in service mode are minimized. The proposed support functionality can be supported in idle mode.

In a first option, the predetermined information may be a temporary cell identifier selected from a predetermined range of cell identifiers. As an example, a "specific" physical cell identifier (e.g. identity, identification or other types of cell identifying information) out of a reserved set can be assigned to cells which are newly introduced into the network. The set of specific physical identifiers or temporary identifiers can be reserved for network access devices brought newly into the network, so as to start operating under testing conditions. The predetermined range could be announced in a system information broadcast message or could alternatively or additionally be set by a setting function, e.g., provided in a terminal device or being defined by the standard.

In a second option, the predetermined information may be a cell testing flag provided in a broadcast message.

As an additional option, a connection could be established between an access device of the target cell and an access device of a neighbouring cell. Then, neighbour cell information could be exchanged via said connection.

Additionally, a predetermined signaling from said cell to neighbouring cells could be used in order to confirm the setting of the cell identifier. In a specific example, the predetermined signalling could be performed recursively until an appropriate setting is found.

As a further option, a predetermined control signaling could be provided to indicate a remaining time of the search phase and the set cell identifier under which the cell will be available again after the search phase. This predetermined control signaling may for example be comprised in an update of a system information broadcast. Thereby, it can be taken into account that a given network access device shall not have two neighbours using the same physical identifier. Otherwise it would be unable to identify the cell when this specific physical identifier is reported by a terminal device.

If the predetermined information is received in a neighbouring cell of the target cell, a reporting action can be initiated in the neighbouring cell about the target cell in response to the receipt of the predetermined information.

The above determination and reporting actions may be initiated only at a pre-selected set of terminal devices.

The terminal device may be configured to report a received signal power (e.g. reference signal received power (RSRP)) in order to distinguish between cell identifiers used for determination of a "normal" or "final" cell identifier and potential handover neighbours. The terminal device may however not be able to decode all broadcast channels, especially not for far distant cells which are only relevant for cell identifier detection.

Further advantageous modifications are defined in dependent claims.

### BRIEF DESCRIPTION OF THE DRAWINGS

The present invention will now be described based on embodiments with reference to the accompanying drawings in which:
Fig. 1 shows a schematic diagram indicating a network architecture in which the present invention can be implemented;
Fig. 2 shows schematic signaling diagram of a conventional autonomous cell-ID mapping procedure;
Fig. 3 shows a schematic block diagrams of a terminal device and a network access device according to an embodiment of the present invention;
Fig. 4 shows a flow diagram of a cell identifier selection procedure according to an embodiment of the present invention;
Fig. 5 shows a flow diagram of a cell identifier conflict avoidance procedure according to an embodiment of the present invention; and
Fig. 6 shows a schematic block diagram of a software-based implementation according to an embodiment of the present invention.

### DESCRIPTION OF THE EMBODIMENTS

In the following, embodiments of the present invention will be described based on coordinated actions between selected UEs and eNodeBs (eNBs) in a cellular network system according to LTE specifications.

Fig. 1 shows a schematic diagram of a general network architecture in which the present invention can be implemented. In Fig. 1, eNBs A to C are indicated with their respective cells. To assure confusion-free assignment of physical cell identifiers, an eNB (e.g. eNB C in Fig. 1) shall not be neighbouring two cells (e.g. cell A3 and cell B3 in Fig. 1) that use the same physical identifier, as it will not be capable to discern which one is meant when a UE (e.g. either UE_a and UE_b in Fig. 1) reports the physical identifier (Phy_CID) as part of the normal target cell search.

The above confusion-free assignment can be achieved by a coordinated action of selected UEs and eNBs to allow identification of an appropriate physical identifier for a given or target cell.

According to an embodiment, a range of physical identifiers (e.g. temporary Phy_CIDs or t_Phy_CID) are reserved and available as starting identifiers for those cells that will look for an appropriate physical identifier. The range of physical identifiers to be used for this purpose could be announced in a system information broadcast (SIB) of the cells.

As an alternate option, this range can be reserved in a related standard, e.g. the 3GPP standards.

In a self-optimization process, a cell testing flag (e.g. a cell testing bit or bit pattern) may be used as an alternate indication for the appropriate UEs to provide (measurement) reports of physical identifiers. The cell testing flag may be signaled in a broadcast channel (e.g. the primary BCH), which would alleviate the need of reserved physical identifiers for test purposes and eventually avoid some re-configurations of the physical identifier.

As a further option, operators could configure a specific subset of physical identifiers for this purpose and indicate this specific set to all or a subset of UEs that will be supporting such reporting activities.

The detection of a particular physical identifier, in this case a temporary physical cell identifier (t_Phy_CID), is interpreted by a UE (or by specific UEs that are members of e.g. a particular subscriber group, i.e. a closed subscriber group (CSG)) as a signal or trigger to perform measurements on neighbouring cells. Consequently, supporting UEs will report on neighbouring cells (e.g. physical cell identifier (Phy_CID) and corresponding global cell identifier (Global_CID)) in at least one of the following circumstances:
- If the UE is located in the new, self-configuring or target cell that is using a temporary physical identifier, it will report on all identified neighbours;
- If the UE is located in a neighbouring cell, it will report on the self-configuring neighbour cell (target cell) when it detects it.

Additionally, neighbouring eNBs may establish a connection to the self-configuring eNB of the target cell and exchange a neighbouring cell information, e.g., neighbour cell lists.

Finally, a specific signalling can be provided from the self-configuring eNB to the neighbouring eNBs to indicate the finally selected or "normal" physical identifier and to seek for confirmation. Optionally, this specific signalling may be based on a potentially recursive query until the appropriate physical identifier is found (depending on the physical identifiers used by neighbours of neighbours.

This proposed cell identifier selection is thus appropriate for self-configuration and self-optimization purposes.

As a further enhancement, a procedure could be provided to prevent the unavoidable scenario where a given cell has two neighbours using the same physical identifier. The proposed procedure relies on a signalling between concerned eNBs and a decision to trigger a physical identifier reselection procedure at the eNB that provides the cell having detected the conflict.

Furthermore, in order to properly support switching from the use of the temporary physical identifier to the finally selected or normal physical identifier in a way that minimizes impact on the UE, a specific signalling (e.g. in the form of an SIB update of the cell) can be provided, in which a remaining time of use of the temporary physical identifier (i.e. remaining time or duration of the test phase) and the selected and set physical identifier under which the cell is available again after the end of the test phase.

The above signalling procedures may take place between eNBs according to information obtained from the UEs about the existing neighbours or according to information obtained directly from the neighbours. However, it is also possible to support and control these methods from a central entity (e.g. an operation and maintenance (O&M) entity) to which the involved eNBs are connected and provide the information for dedicated processing and resulting decision in the allocation of physical CIDs.

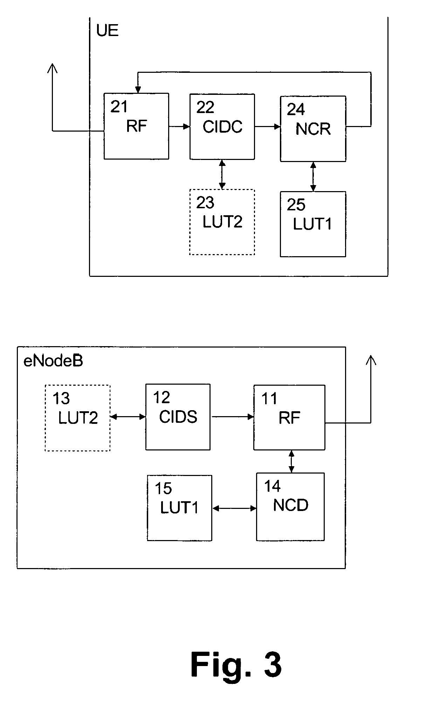

Fig. 3 shows schematic block diagrams of an UE and an eNB according to an embodiment, which enable UE based automatic neighbour detection at reduced signalling effort. Only those blocks are shown, which are involved in the proposed functionality. Other blocks have been omitted for reasons of simplicity. A "specific" physical CID out of a reserved set (e.g. a specific set of physical CIDs reserved for eNBs brought newly into the network, which physical CIDs are also called "t_Phy_CID" in the following) can be assigned to cells which are to be newly introduced into the network, and operation is started under testing conditions.

A UE which is configured to support the proposed optimization/self-configuration functionality comprises a CID checking functionality or unit (CIDC) 22 and a neighbour cell reporting functionality or unit (NCR) 24, which may be implemented by at least one controller or other processing unit. Respective look-up tables (LUTs) 23, 25 or other memory units are provided, which are accessed by the CID checking unit 22 and the neighbour cell reporting unit 24, respectively. A first LUT 25 stores determined CIDs of neighbouring cells and a second optional LUT 23 stores the specific set of t_Phy_CIDs reserved for testing purposes of new eNBs. The second LUT 23 can be dispensed with, if the cell testing flag is used for indicating the test phase. Furthermore, an RF unit 21 (e.g. transceiver) is provided for receiving and transmitting signalling messages.

In the present embodiment, only an UE configured to support network optimization/self-configuration will report about a cell using one of these t_Phy_CIDs (called "supporting UE" in the following, the set of "supporting UE" may be degenerate to "all UEs" in case no specific UE-support configuration is foreseen, which depends on the finally selected solution in standards or by the operators.). The CID checking unit 22 of the UE will try to identify (by retrieving the corresponding global CID) a neighbour cell having a physical CID starter code assigned, which means that a t_Phy_CID is used or a cell testing flag is set, to thereby achieve signalling free solution for UEs. In response to a trigger from the CID checking unit 22, the neighbour cell reporting unit 24 of the UE initiates a reporting action if the concerned neighbouring cell is not in the neighbouring cell list (NCL) stored in the first LUT 25 (otherwise it shall assume that the neighbour cell is already known by its cell and a report is not needed).

At the eNB a CID setting functionality or unit (CIDS) 12 and a neighbour cell determination functionality or unit (NCD) 14 are provided, which may be implemented by at least one controller or other processing unit. Respective look-up tables (LUTs) 13, 15 or other memory units are provided, which are accessed by the CID setting unit 12 and the neighbour cell determination unit 14, respectively. A first LUT 15 stores determined CIDs of neighbouring cells and a second optional LUT 13 stores the specific set of t_Phy_CIDs reserved for testing purposes of new eNBs. The second LUT 13 can be dispensed with, if the cell testing flag is used for indicating the test phase. Furthermore, an RF unit 11 (e.g. transceiver) is provided for receiving and transmitting signalling messages.

In the present embodiment, the CID setting unit 12 of the eNB will access the optional second LUT 13 to select a t_Phy_CID to be used or will set a cell testing flag, to thereby indicate the test phase. The CID determination unit 12 receives reports via the RF unit 11 and stores reported CIDs in an NCL stored in the first LUT 15.

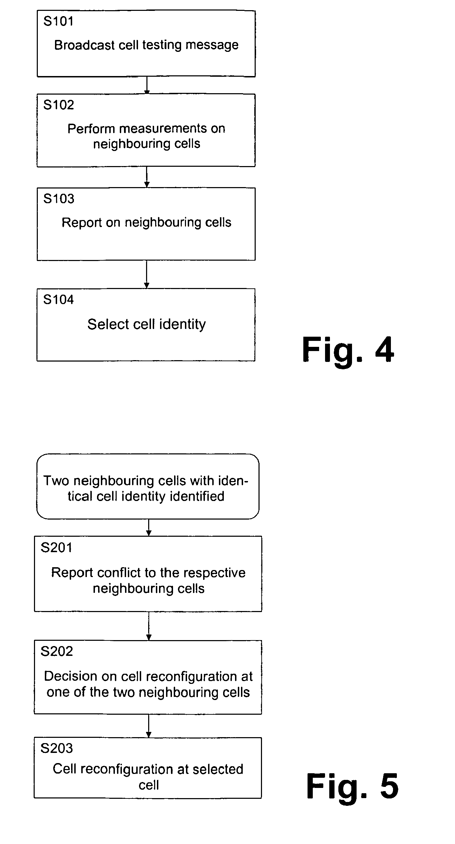

In the following, the operation of the above UE and eNB of Fig. 3 will be described in more detail based on a schematic flow diagram of Fig. 4.

In step S101, a newly introduced eNB broadcasts a selected t_Phy_CID in a cell testing message to indicate cell test phase. When a supporting UE is in a cell and detects a neighbour using a t_Phy_CID, and it is in a condition of providing a report (e.g. in idle mode with long discontinuous reception intervals (DRXs)), it reports the t_Phy-ID detected (together with the corresponding global ID (CGI)) and initiates CID measurements on neighbouring cells (step S102).

In step S103, a corresponding eNB which receives the report from the supporting UE then establishes an X2 interface with the eNB providing the cell under testing conditions, identifying itself as neighbour. It also reports the NCL of the corresponding cell, which will help the self-configuring cell selecting a final Phy_CID avoiding any reuse of codes of cell in this NCL. If the eNB is broadcasting an NCL, the corresponding eNB will then include the newly discovered cell in the NCL, so that other supporting UEs may avoid reporting as they verify it is a known neighbour).

Additionally, if a supporting UE detects a cell using a t_Phy_CID (i.e., in the middle of a self-configuration process), it will also report in step S103 all neighbouring Phy_CIDs together with the corresponding globally unique CGls, as broadcasted by the cells on the BCH, to the eNB, if it hasn't done so yet. This implies that the neighbour cell reporting unit 24 of the UE memorises (e.g. in the first LUT 25) those Phy_CIDs it has already reported to this serving cell. Once the UE changes to another cell that does not have a Phy_CID out of the set of "specific" ones, it may delete this information (e.g. by its neighbour cell reporting unit 24). The neighbour cell determination unit 14 of the self-configuring eNB may broadcast an updated NCL in order to indicate to supporting UEs which neighbours have been already discovered, and thus avoid UEs performing additional measurements.

Once the CID setting unit 12 of the eNB supporting the new/updated cell is confident enough that all neighbours of this cell are detected by the UEs (e.g. by means of a timer), it selects a suitable "normal" Phy_CID in step S104 and changes the t_Phy_CID to a "normal" one, i.e. to one which does not belong to the set of "specific" ones for neighbour detection and which does not belong to the set of those Phy_CIDs which were "seen" by the reporting UEs from one of its neighbours and which are stored in the first LUT 15. Upon change to the "normal" Phy_CID, the eNB may report the chosen Phy_CID to its neighbour cells.

However, in connection with the above procedure of Fig. 4, it is necessary to take Phy_CID confusion avoidance into account. A given eNB may not have two neighbour cells using the same Phy_CID. Otherwise, it is unable to identify the cell when that specific Phy_CID is reported by a UE. For this reason, neighbouring eNBs may confirm to the eNB that the selected Phy_CID is acceptable (i.e. does not correspond to any of their own neighbours). If one neighbour eNB indicates that the selected Phy_CID is already in use by one of its own neighbours, the eNB can select another and report it again to all neighbours, e.g., by repeating the same procedure. The above reporting procedure of Fig. 4 may therefore be applied recursively until an appropriate Phy_CID without confusion or collision has been found. The probability that no appropriate Phy_CID is found, because any possible candidate is already associated by one of the neighbour eNBs to another distant neighbour depends on the number of available Phy_CIDs and can be kept low if a sufficiently high number of available Phy_CIDs is provided.

If no suitable Phy_CID can be found, an alarm could be routed to the O&M (e.g. with a cause "No appropriate Phy_CID found"), so that a Phy_CID reselection at the "neighbours of the neighbours" having caused the least number of rejections for the specific Phy_CID could be initiated.

Furthermore, if the eNB, for optimisation reasons, wishes to check the current neighbours (for self-optimisation purposes), it may again change to a t_Phy_CID, report this change to all configured neighbour cells and cause supporting UEs camping on that cell (or receiving services in a low DRX mode) implicitly (i.e. without dedicated signalling), to (again) start reporting all neighbours. The service interruption caused by Phy_CID change is the price to pay for this kind of automatism, but can be addressed by the alternate solution of using a cell testing flag.

As additional option, the UE could report the signal strength of a detected neighbour (e.g. a reference signal received power (RSRP), probably relative to the BCH of the cell it camps on or receives service from) in order to allow the eNB to distinguish between suitable neighbours for X2 connectivity and HO purposes and those neighbours, which Phy_CID should not be allocated after the reporting process. It needs also to be stated, that UEs probably can only detect a Phy_CID without being able to decode the BCH, which should be reported to the eNB as well.

The number of t_Phy_CID for automatic neighbour detection purposes may for example be in the range of 2 to 10. As an alternative, the range of Phy_CIDs used as t_Phy_CID can be broadcasted in the SIB of the cells. In this manner the operator has the necessary flexibility and can apply different ranges to different network areas. An absence of this broadcast information may indicate that no t_Phy_CID is available.

The proposed CID selection can be used in idle mode and/or low activity DRX modes, without the need of dedicated signalling or broadcast signalling. No explicit network control of UEs is needed to report. The simple detection of a t_Phy CID or a cell testing flag can be sufficient for UEs to trigger reporting. Phy_CID planning is no longer required and the already standardised X2 interface setup, including the indication of Phy_CIDs, can be used. With X2 signalling support Phy-CIDs can be signalled in case the eNB changes the Phy_CID.

In order to properly support switching from the use of the t_Phy_CID to the selected Phy_CID in a way that minimizes impact on the UE, a specific signalling (in the form of a SIB update of the cell) can be used by the CID setting unit 12 of the eNB. This specific signalling may indicate a remaining time of use of the t_Phy_CID and the selected Phy_CID under which the cell is again available.

In order to avoid collisions during the Phy_CID configuration process, the operator should avoid that geographically neighbouring eNBs start the proposed selection procedure simultaneously. If neighbouring cells start this procedure simultaneously and happen to select the same Phy_CID, none of them may be able to realize the problem, and only under particular circumstances a common neighbour may be able to detect it. The availability of an initial configuration (either by means of radio network planning or else by means of a random assignment of a Phy_CID to the eNB) can avoid such a situation where eNBs start from scratch by launching the self-configuration process.

As already mentioned above, especially in the context of self-optimization, an alternate approach to the reservation of a subset of Phy_CIDs for cells subject to configuration consists of the use of a cell testing flag in the broadcast channel of the cell (or even at physical (L1) protocol layer). The CID setting unit 12 of the eNB may activate the cell testing flag by setting it to a predetermined bit value or pattern, when it wants to perform a verification of its configuration and start receiving notifications or reports from UEs. The cell continues using a Phy_CID provided during initial radio network configuration or else obtained by the method described above. In the proposed embodiment, a selected set of UEs may react to the indicated setting of the cell testing flag and provide reports on neighbouring cells. The cell that has started self-optimization under test identifies all its neighbours by the neighbour cell determination unit 14 of the concerned eNB and, as described previously, and reports to these neighbours the Phy_CID under use. If a neighbour indicates that this Phy_CID is already under use by another neighbour, the CID setting unit 12 of the eNB can start selecting another Phy_CID using the procedure described above in connection with Fig. 4.

Fig. 5 shows a flow diagram of a procedure which is triggered in a case where a given cell identifies two neighbours (e.g. by their global CID) using the same Phy_CID.

In step S201 the eNB that supports this cell reports this conflict to the two corresponding neighbours and takes a decision in step S202 to trigger a Phy_CID reconfiguration at one of this two neighbours. As an alternative, it is also possible that the decision in step S202 as to which cell is to be reconfigured is either left to the two corresponding eNBs to be handled or else to a third instance (e.g. the O&M unit). The decision may be based on a random selection of one of both, or the number of neighbours of each of the conflicting cells may be requested and the Phy_CID reconfiguration may be decided for the cell with the lower number of neighbouring cells. Finally, in step S203 a cell reconfiguration is initiated, which may be similar to the procedure of Fig. 4.

For verification purposes in this context it is useful that any eNB can be asked about the Phy_CID associated to a cell known by its global CID, in order to verify the information provided by the common neighbour that reported the conflict.

As an exemplary signaling protocol for providing an interface between the eNBs 301 to 306 and the central network directory 80, the Lightweight Directory Access Protocol (LDAP) can be used. Thereby, the content of the central network directory 80 can be controlled by the above-described self configuration or optimization procedures.

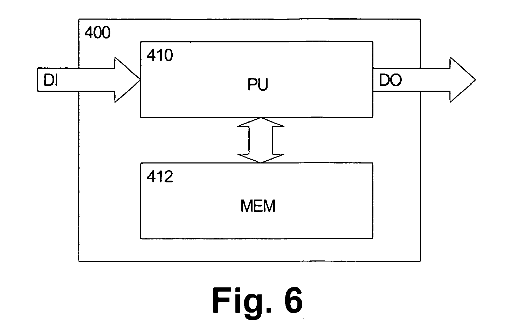

Fig. 6 shows a schematic block diagram of an alternative software-based implementation of the proposed embodiments for achieving self-configuration and optimization at reduced signalling load. The required functionalities can be implemented in any terminal device or network access device 400 with a processing unit 410, which may be any processor or computer device with a control unit which performs control based on software routines of a control program stored in a memory 412. The control program may also be stored separately on a computer-readable medium. Program code instructions are fetched from the memory 412 and are loaded to the control unit of the processing unit 410 in order to perform the processing steps of Figs. 4 and 5 and the above functionalities of blocks 12, 14, 22 and 24 of Fig. 3, which may be implemented as the above mentioned software routines. The processing steps may be performed on the basis of input data DI and may generate output data DO. At the terminal side the input data DI may correspond to a detected Phy_ID of a broadcast information and at the network access side the input data DI may correspond to a received neighbour report or list, while at the terminal side the output data DO may correspond to a control signal for initiating a CID measurement or triggering a neighbour reporting action and at the network access side the output data DO may correspond to the selected Phy_CID to be broadcast or reported.

Consequently, the above embodiments may be implemented as a computer program product comprising code means for generating each individual step of the signaling procedure when run on a computer device or data processor of the network access device (e.g. NodeB 20) or terminal device (e.g. UE 10), respectively.

In summary, a method and apparatuses for selecting a cell identifier in a cellular network have been described, wherein a predetermined information indicating a search phase for the cell identifier is broadcast from a cell. At least one cell identifier of respective neighbouring cells is determined and reporting to the cell in response to a receipt of the predetermined information. The cell identifier is then set for the cell based on the reported at least one cell identifier. Thereby, cell identity setting and neighbour relations establishment can automated at low signaling load and the need of manual planning can be reduced.

It is apparent that the invention can easily be extended to any mobile communication network such as UMTS terrestrial radio access network (UTRAN) (including high speed packet access (HSPA), e.g. i-HSPA or HSPAevo), where cell identification is initially based on a Phy_ID, and correct assignment of a (physical) identity to a cell is essential for the network to work. However, it is noted that the above mentioned term "cell identifier" is used to designate any kind of information by which cells are discriminated. It thus also covers scrambling codes in UTRAN systems or other type of signaling or channel codes or the like, which are allocated to cells. The embodiment may thus vary within the scope of the attached claims.

## Claims

1. A method comprising:
a) broadcasting from a cell a predetermined information indicating a search phase for a cell identifier;
b) determining at least one cell identifier of respective neighbouring cells and reporting said at least one determined cell identifier to said cell in response to a receipt of said predetermined information; and
c) setting said cell identifier for said cell based on said reported at least one cell identifier.

2. The method according to claim 1, further comprising using as said predetermined information a temporary cell identifier selected from a predetermined range of cell identifiers.

3. The method according to claim 2, further comprising announcing said predetermined range in a system information broadcast message.

4. The method according to claim 1, further comprising setting as said predetermined information a cell testing flag in a broadcast message.

5. The method according to claim 2, further comprising providing a setting function for setting said predetermined range in a terminal device.

6. The method according to any one of the preceding claims, further comprising establishing a connection between an access device of said cell and an access device of a neighbouring cell, and exchanging neighbour cell information based on decoded broadcast information related to a global cell identifier.

7. The method according to any one of the preceding claims, further comprising providing a predetermined signaling from said cell to neighbouring cells . in order to confirm said setting of said cell identifier.

8. The method according to claim 7, further comprising performing said predetermined signalling recursively until an appropriate setting is found.

9. The method according to any one of the preceding claims, further comprising providing a predetermined control signaling indicating a remaining time of said search phase and said set cell identifier under which said cell is again available after said search phase.

10. The method according to claim 9, wherein said predetermined control signaling is comprised in an update of a system information broadcast.

11. The method according to any one of the preceding claims, further comprising initiating said determination and reporting only at a pre-selected set of terminal devices.

12. The method according to any one of the preceding claims, further comprising reporting in said neighbouring cell about said cell in response to a receipt of said predetermined information.

13. An apparatus comprising:
a) a checking controller configured to broadcast to a cellular network a predetermined information indicating a search phase for a cell identifier; and
b) a setting controller configured to set said cell identifier for said cell based on at least one cell identifier reported by said cellular network.

14. The apparatus according to claim 13, wherein said checking controller is configured to use as said predetermined information a temporary cell identifier selected from a predetermined range of cell identifiers.

15. The apparatus according to claim 14, wherein said apparatus is configured to announce said predetermined range in a system information broadcast message.

16. The apparatus according to claim 13, wherein said checking controller is configured to set as said predetermined information a cell testing flag in a broadcast message.

17. The apparatus according to any one of claims 13 to 16, wherein said apparatus is configured to establish a connection to an access device of a neighbouring cell, and to exchange neighbour cell information.

18. The apparatus according to any one of claims 13 to 17, wherein said apparatus is configured to provide a predetermined signaling from said cell to neighbouring cells in order to confirm said setting of said cell identifier.

19. The apparatus according to claim 18, wherein said apparatus is configured to perform said predetermined signalling recursively until an appropriate setting is found.

20. The apparatus according to any one of claims 13 to 19, wherein said checking controller is configured to provide a predetermined control signaling indicating a remaining time of said search phase and said set cell identifier under which said cell is again available after said search phase.

21. The apparatus according to claim 20, wherein said checking controller is configured to provide said predetermined control signaling in an update of a system information broadcast.

22. A network access device comprising an apparatus according to any one of claims 13 to 21.

23. A chip device comprising an apparatus according to any one of claims 13 to 21.

24. An apparatus comprising a reporting controller configured to determine at least one cell identifier of respective neighbouring cells and to report said at least one determined cell identifier to a cell in response to a receipt of a predetermined information indicating a search phase for a cell identifier of said cell.

25. The apparatus according to claim 24, wherein said reporting controller is configured to detect said predetermined information if a received cell identifier is located within a predetermined range of cell identifiers.

26. The apparatus according to claim 25, wherein said reporting controller is configured to derive said predetermined range from a system information broadcast message.

27. The apparatus according to claim 24, wherein said reporting controller is configured to detect said predetermined information if a cell testing flag is set in a broadcast message.

28. The apparatus according to claim 25, wherein said apparatus comprises a setting functionality for setting said predetermined range.

29. The apparatus according to any one of claims 24 to 28, wherein said reporting controller is configured to report in a neighbouring cell about said cell in response to a receipt of said predetermined information.

30. A terminal device comprising an apparatus according to any one of claims 24 to 29.

31. A chip device comprising an apparatus according to any one of claims 24 to 29.

32. A computer program product comprising code means for generating steps (a) and (c) of method claim 1 when run on a computer device.

33. A computer program product comprising code means for generating step (b) of method claim 1 when run on a computer device.

34. A system comprising at least one apparatus according to claim 13 and at least one apparatus according to claim 24.
